# EUROPEAN PATENT SPECIFICATION

(11) **EP 3 077 598 B1**
(45) Date of publication and mention of the grant of the patent: **13.06.2018**
(21) Application number: 14838810.1
(22) Date of filing: 01.12.2014
(51) Int. Cl.: E01D 19/16, F16G 11/04, D07B 1/18, D07B 7/16, F16G 11/14

(54) **STRAND REALISED BY WINDING A RIBBON AS A BUNDLE**
LITZE VERWIRKLICHT DURCH WICKELN EINES BANDES ALS EIN RING
CORDE RÉALISÉE PAR L'ENROULEMENT D'UNE BANDE COMME ÉCHEVEAU

(30) Priority: 02.12.2013 IT RM20130663
(43) Date of publication of application: 12.10.2016
(73) Proprietor: Marnetto, Roberto, 00136 Roma (IT); Brancaleoni, Fabio, 00152 Roma (IT)
(72) Inventor: BRANCALEONI, Fabio, 00152 Roma (RM) (IT); MARNETTO, Roberto, 00136 Roma (RM) (IT)
(74) Representative: Mulas, Chiara
(86) International application number: PCT/IT2014/000321
(87) International publication number: WO 2015/083192

(56) References cited:
- WO-A1-2012/011143
- DE-C- 960 044
- JP-U- S5 445 076
- US-A- 500 267

## Description

The present invention relates to a strand realised by winding a ribbon as a bundle.

More specifically, the present invention relates to a strand comprising a continuous ribbon wound as a bundle about two pins, corresponding to the ends for hooking the strand to a structure.

A particular type of strand will be described in the following, realised by composition of portions or tracts of a ribbon, and employed for civil works, such as suspension bridges, but it is to be understood that the present invention can be applied to every type of strand, regardless the material is made up of, and regardless its final use.

Always more difficult challenges in the infrastructure field, with the need of covering always larger span, involve always more daring choices, with all the structural elements required to give the best response, not only strictly as far as static efficiency is concerned, but also maximum guarantee both from the point of view of durability and the less difficulties of installation, since these aspects involve high economic costs.

As it is well known, among known solutions for suspensions systems, and particularly for bridge decks, only two solutions exist, i.e. ropes for composing wires and full section round bars.

Ropes realised by composing steel wires mainly have the following drawbacks:
- exposition to corrosion aggression, due to geometric cavities caused by circular section composition, this requiring expensive manufacturing and protection solutions; in fact, presence of empty spaces exposes said elements to direct contact with atmospheric agents that can be particularly aggressive, e.g. when crossing the sea; the above involves either high technological preventive costs and maintenance costs; a solution to this kind of problems provides blowing hot air within ropes, with deriving costs due to the technology and to power consumption;
- high deformability under load, characterized by an apparent elastic module much lower than the real one of the material; this means that with the same load, a cable is more deformed, with the bigger differences, than a bar having the same resisting section; this is due to the fact that ropes are realised by twisting wires and said shape causes a "relaxation" under load that is summed to deformation caused by pure lengthening of the material, thus conferring a higher total apparent deformability. This feature is usually considered as negative for proper correction of a suspended structure.
- the rope, in its secondary arrangements, besides a single rope, can be a double rope, obtained folding the same rope about the main suspension cable; in correspondence of the folding, the rope is contained within a channel element housing the same along the 180 degrees folding run; in this case, gravitational rope makes wires, particularly in correspondence of the ridge position, permeating each other, thus activating very high local stresses along the contact lines of the cables, that are usually negative for proper global operation and thus jeopardizing their durability.

Instead, suspension bars have the following negative aspects:
- due to constructive problems, as well as to handling problems, it is not possible realizing very long elements as a single piece; this aspect involves the needing to nearly always use mechanical joints to obtain the desired length;
- higher working costs and higher exposition to corrosion triggering, i.e. needing of particular and expensive shrewdnesses to prevent humidity entering within gaps between said joints, with consequent deterioration;

Difficult handling and thus higher assembling costs.

In this context it is included the solution according to the present invention, suggesting overcoming all the above drawbacks, affording a higher technological and installation simplicity, making it extremely convenient either under the structural and economic point of view.

Still another object of the present invention is that of making it convenient the realization of the strand directly *in situ,* being its components easy to be transported and handled, and their assembling very straightforward.

International patent application WO 2012/011143 A1 described a strand obtained by composing placing side by side a plurality of ribbon having straight cross-section, juxtaposed each other, so that final strand has no inner cavities having a geometric origin, as those due to the placing side by side circular cross-section elements.

However, the above solution is characterized by a technical limitation in the solution for tightening ribbons, so that all the described embodiments are based on the possibility of activating an inner friction level sufficient to support the whole outer load.

Further, Japanese utility model JP S54 45076 U describes a strand obtained starting from a ribbon wound on the same and sewed at the ends and along its body by suitable seams, creating two hooking eyelets. However, said solution has a low mechanical reliability, and it is in any case not applicable for metallic ribbons.

It is the object of the present invention that of overcoming the structural hooking limitation suggesting a completely new general arrangement of the invention that can maximize the structural efficiency on the basis of a new realization concept of the strand that reduce at the minimum the hooking stresses.

It is the object of the present invention a strand comprised of a ribbon, mainly having a linear extension with flat faces and a substantially flattened straight cross-section, said strand comprising two pins spaced each other along an axis passing between said pins, said ribbon being wound up on said two pins, in such a way to continuously form a plurality of overlapped coils, wherein the plurality of ribbon portions extending parallel to said axis passing between a pin and the other realize two arms and a bending point in correspondence of each pin, said strand comprising at least one clamping device near at least one of said bending points, able to direct, from outside toward inside said strand, each of said arms in at least one counter-bending point in order to block the mutual sliding of said plurality of ribbon portions and the rotation of said strand around at least one of said pins, as a result of a loss of balance of the load applied on said strand.

Preferably, according to the invention, said strand can comprise a clamping device near each of said bending points.

Still according to the invention, said at least one clamping device can comprise retaining means of said plurality of coils, and thrust means, able to direct, from outside toward the inside of said strand, each of said arms in said at least one counter-bending point.

Always according to the invention, said at least one clamping device can comprise a hooking element coincident with one of said pins, on which it is wound up said ribbon, two side plates, each having at least one hole, at least one thrust element apt to be inserted in said at least one hole of said side plates, being arranged externally to said arms of said strand, in such a way to realize said at least one counter-bending point on each arm of said strand.

Particularly, according to the invention, said clamping device can comprise two thrust elements inserted in said at least one hole of each of said side plates, each thrust element being arranged externally with respect to a relevant arm of said strand.

More particularly, according to the invention, each one of said thrust elements can have a cross-section shaped as an arc of a cylinder, having an external radius so as to be inserted in said at least one hole of each of said plates in a symmetrical way in relation to said axis, and said thrust elements can realize two counter-bending points on each of said arms.

Further, according to the invention, said clamping device further comprises two fastening elements, each one coupled to said pin externally to a respective plate, in correspondence of at least one hole, in order to block said clamping device.

Furthermore, according to the invention, each plate can comprise two holes, said hole being able to house said pin, and said two thrust elements being inserted through said hole of each of said plates, and in that the centres of said holes are along said axis passing between said first and said second pin on which said ribbon is wound up.

Further, each of said two side plates of said clamping device can comprise two holes among said at least one hole, symmetrically arranged in relation to said axis, and in that two thrust elements are provided, each one being inserted in a respective hole of said plates, being placed externally to said arms of said strand.

Preferably, said plates and said pin can be one single integral element.

Still according to the invention, said at least one thrust element can have a "C" shaped cross-section partially wrapping said strand, having two free ends, said thrust element realizing, in correspondence of said free ends, a counter-bending point on each arm of said strand.

Alternatively, according to the invention, said retaining means can comprise two side plates each one having two shaped housings, symmetrical each other with respect to said axis, in such a way that, when said plates are coupled, said shaped housings direct a respective arm of said strand in said at least one counter-bending point.

Particularly, according to the invention, each of said plates can have a further housing arranged along said axis, and in that said retaining means further comprise a fastening element able to be inserted in said further housings when said plates are coupled to each other.

More particularly, said plates can be one single integral element.

Preferably, according to the invention, said clamping device can comprise a hooking element coincident with one of said pins and said pin can have a hole apt to house a connection element provided with ball joint.

Always according to the invention, said clamping device comprises one hooking element coincident with one of said pins and in said hooking can have a radial wedge-shaped protrusion, apt to be placed between said arms of said strand along said axis in order to avoid the sliding between said arms, preventing the rotation of said pin around its axis.

Finally, according to the invention, at least one of said faces of said ribbon can be rendered sticky.

The invention will be descrive, for illustrative, but not limitative, purpose, with particolar reference to the drawings of the enclosed figures, wherein:
figure 1 shows a perspective view of the realization of the strand according to the invention;
figure 2a shows a front schematic view of force distribution of strand of figure 1;
figure 2b shows a front schematic view of force distribution of strand of figure 1 in case of unbalanced breaking of one or more portions of said strand;
figure 3a shows a front schematic view of force distribution of strand of figure 1 in its final configuration, comprising a clamping device in correspondence of both its ends;

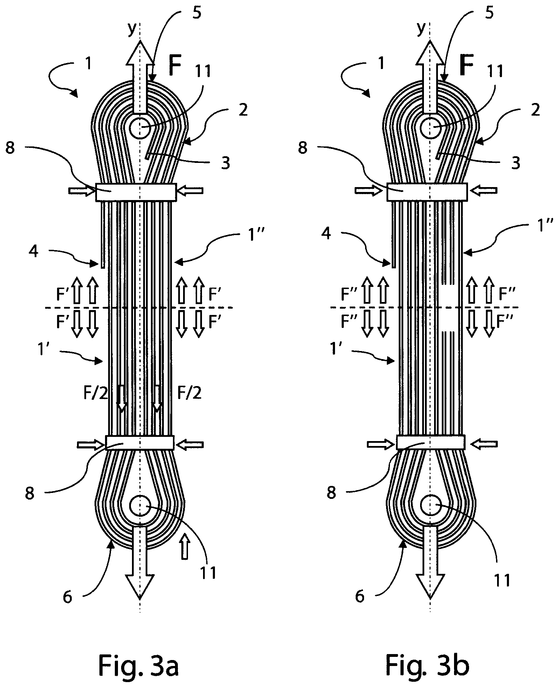

figure 3a shows a front schematic view of force distribution of strand of figure 3a in case on unbalanced breaking of one or more portions of said strand;

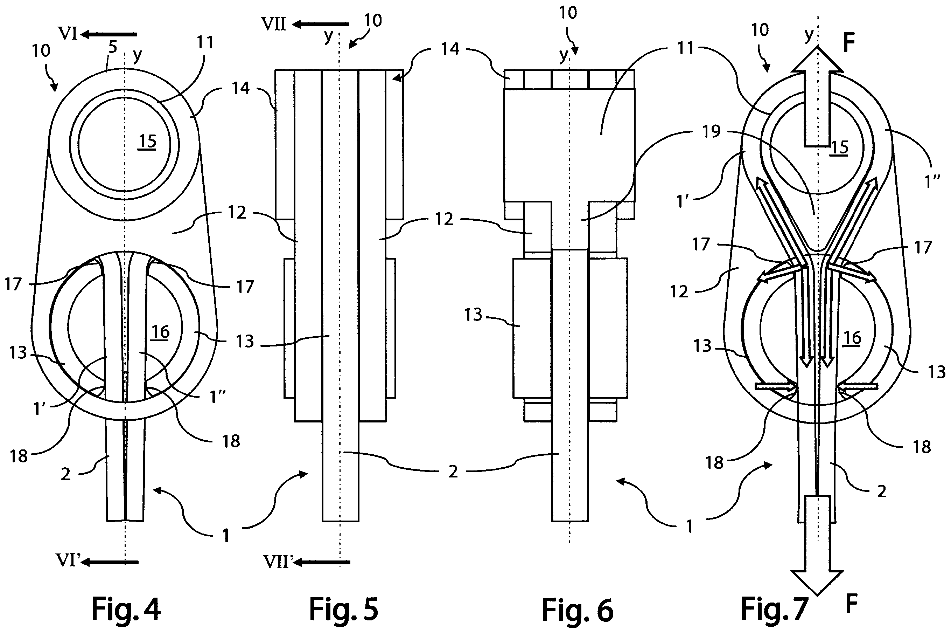

figure 4 shows a front view of the preferred embodiment of clamping device of the strand according to the invention;
figure 5 shows a lateral view of the clamping device of figure 4;
figure 6 shows a lateral section view of device of figure 4 taken along line VI-VI';
figure 7 shows a front section view of device of figure 4 taken along line VII-VII';

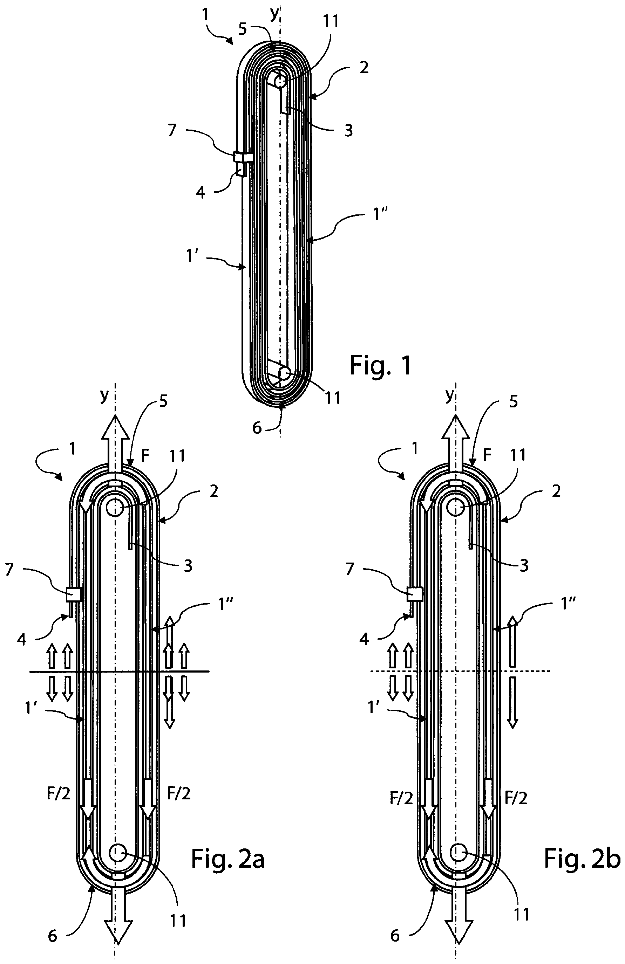

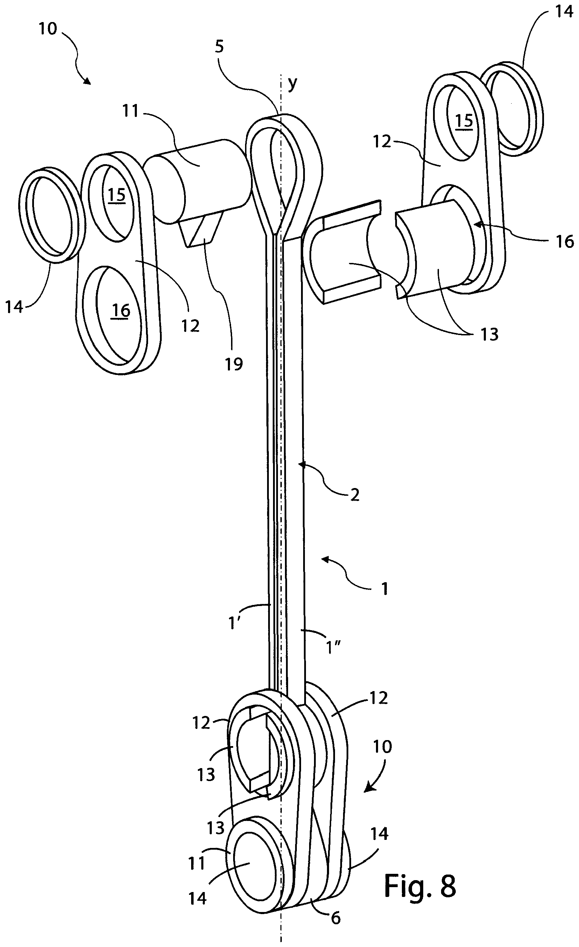

figure 8 shows an axonometric view of the strand of figure 1 comprising a device according to figure 4 for each end, one of which is represented in an esplode view;

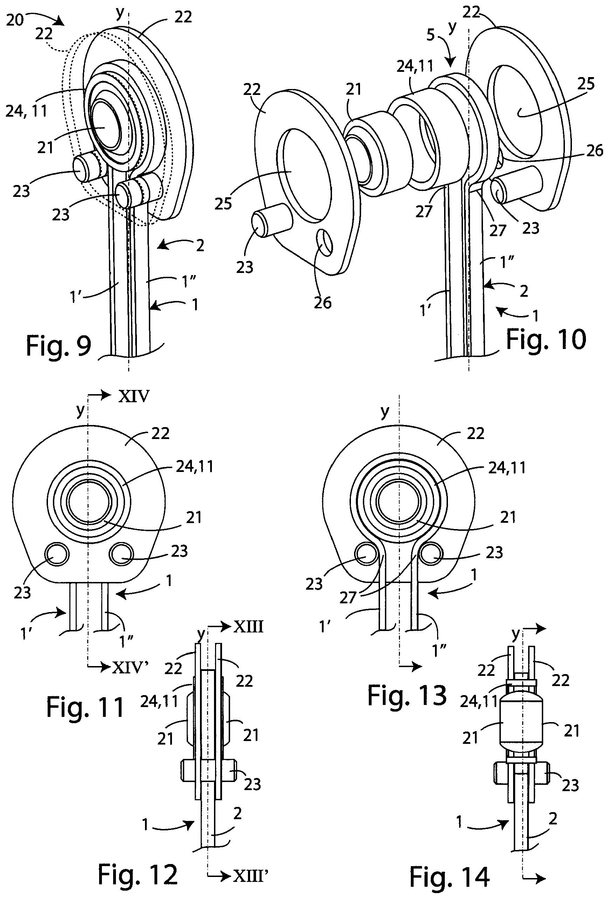

figure 9 shows an axonometric view of a second embodiment of the clamping device of the strand according to the invention;
figure 10 shows an exploded axonometric view of the clamping device of figure 9;
figure 11 shows a front perspective view of the clamping device of figure 9;
figure 12 shows a lateral perspective view of the clamping device of figure 9;
figure 13 shows a front section of clamping device of figure 9 taken along line XIV-XIV' of figure 11;

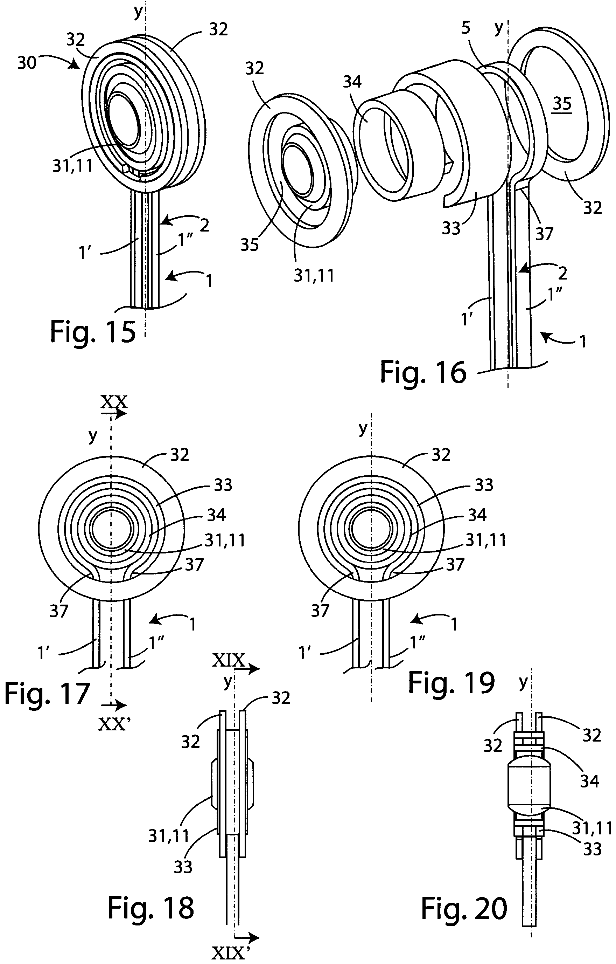

figure 15 shows an axonometric view of a third embodiment of the clamping device of the strand according to the invention;
figure 16 shows an exploded axonometric view of the clamping device of figure 15;
figure 17 shows a front perspective view of the clamping device of figure 15;
figure 18 shows a lateral perspective view of the clamping device of figure 15;
figure 19 shows a front section of clamping device of figure 15 taken along line XIX-XIX' of figure 18;
figure 20 shows a lateral section view of the clamping device of figure 15 taken along line XX-XX' of figure 17;

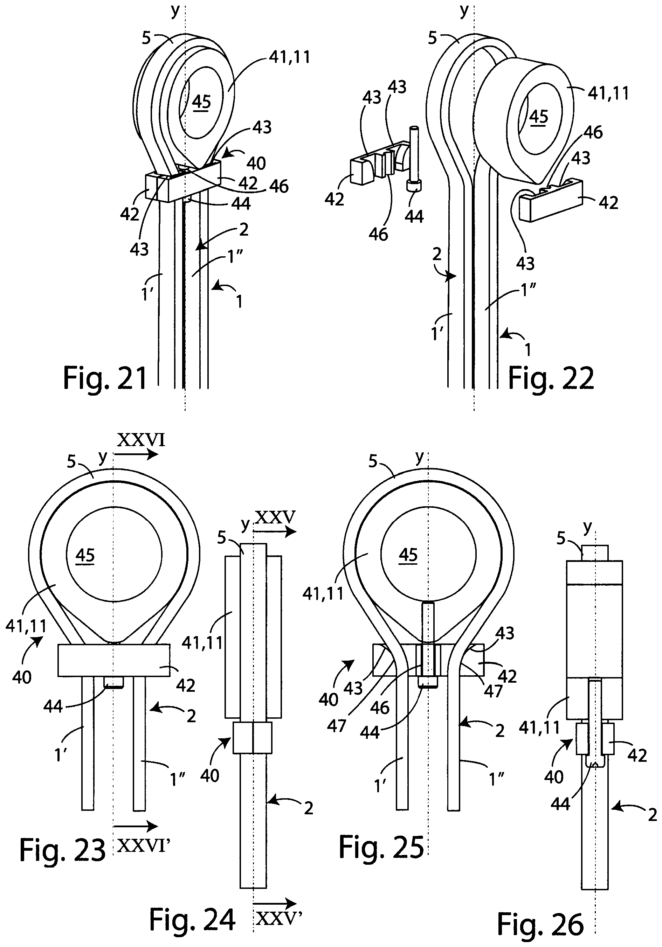

figure 21 shows an axonometric view of a fourth embodiment of the clamping device of the strand according to the invention;
figure 22 shows an exploded axonometric view of the clamping device of figure 21;
figure 23 shows a front perspective view of the clamping device of figure 21;
figure 24 shows a lateral perspective view of the clamping device of figure 21;
figure 25 shows a front section of clamping device of figure 15 taken along line XXV-XXV' of figure 24;
figure 26 shows a lateral section view of the clamping device of figure 21 taken along line XXVI-XXVI' of figure 23;

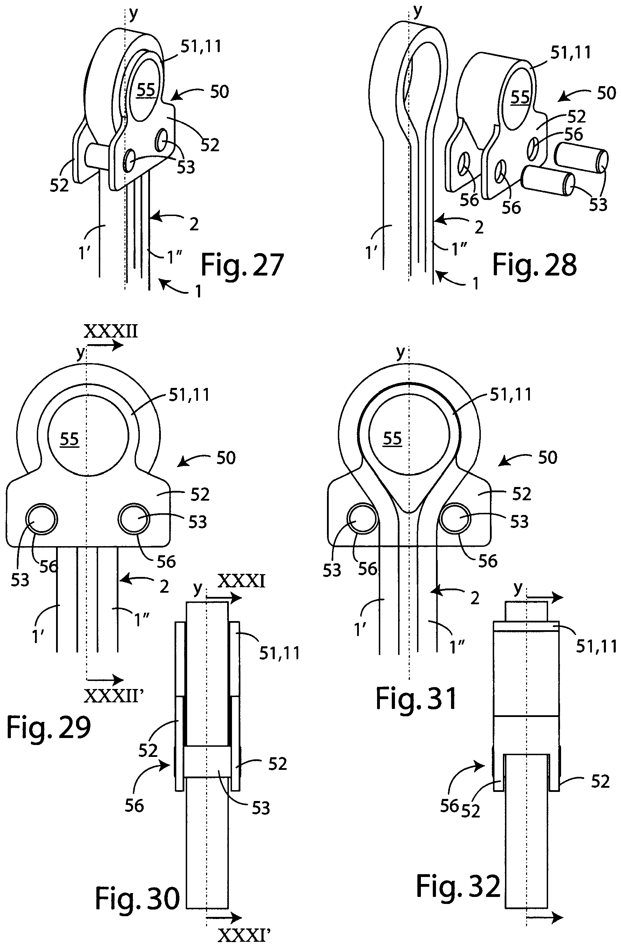

figure 27 shows an axonometric view of a fifth embodiment of the clamping device of the strand according to the invention;
figure 28 shows an exploded axonometric view of the clamping device of figure 27;
figure 29 shows a front perspective view of the clamping device of figure 27;
figure 30 shows a lateral perspective view of the clamping device of figure 27;
figure 31 shows a front section of clamping device of figure 27 taken along line XXXI-XXXI' of figure 30;
figure 32 shows a lateral section view of the clamping device of figure 27 taken along line XXXII-XXXII' of figure 29.

Making reference to figures 1 - 3, it is observed the strand according to the invention, according to its primary representation, indicated by reference number 1. Said strand 1 comprises two pins 11, spaced each other along an axis y passing between said pins 11, a ribbon 2, having a rectangular cross-section, with a first end 3 and a second end 4, wound or turned many times about said two pins, corresponding to two hooking elements 11 of the strand to a structure (not shown), realising a plurality of continuous juxtaposed turns realising a bundle, so that ribbon portions 2 extending parallel with respect to axis y, extending between a pin 11 and the other 11, realize two arms 1', ', 1 and a folding point 5, 6 in correspondence of each pin 11.

Said strand 1 according to the invention is preferably comprised of metallic material, particularly steel.

By ribbon it is meant an element having a prevailing rectilinear or linear extension with flat faces, a quadrangular section, particularly a flat or plane rectangular section, or a substantially flattened section, uniform all along its length so as to be considered a ribbon.

Said first end 3 of the ribbon 2 is free and is provided inside with respect to said bundle, and said second end 4 of the ribbon 2 is provided outside with respect to said bundle, and can be blocked, limiting to the coupling of the ribbon 2 very close, by a blocking element 7.

Every inner turn of the strand 1 bundle, when subjected to a load, is thus blocked by friction activated in two end bending points, in correspondence of said two hooking elements 11.

Thus, strand 1, when loaded, is self-constrained on all turns but the last portion of the ribbon 2, that is blocked by said blocking element 7, thus obtaining an equivalent distribution of the forces F between two arms 1' and 1" of the strand 1 (as shown in figure 2a).

However, treating pins 11 as pulleys, in case of theoretical breaking of a portion of the ribbon 2 and in disadvantageous, but possible, hypothesis that said breaking is unbalanced, thus interesting only one arm 1' or 1" (figure 2b), it would bring to an overloading proportional to stress only in "reduced" arm, being its necessary balancing outer force F always on both arms 1' and 1", thus involving a bigger lengthening and therefore sliding of strand 1 by rotation about pins 11. Said arrangement could determine a relevant criticism quickly jeopardizing reliability of strand due to a string increase of stress on the residual section of the "reduced" arm.

Thus, to obtain the same mechanical reliability of conventional strands, it is necessary that, due to the breakage of one or more sections, it is obtained the same uniform distribution of the load increase on all residual sections or ribbon portions.

Therefore to complete the invention, it has been developed a solution to fully block sliding by rotation about pins/pulleys 11 according to the scheme of figure 3a and 3b, wherein two clamping devices 8 for said arms 1', 1" are provided, in correspondence of both bending points 5 and 6 of said strand 1, in order to unlock sliding of ribbon 2 in correspondence of bending points 5 and 6 of the strand 1, thus realising two counter bending points in correspondence of which it is activated blocking of sliding by friction, particularly of outer windings, in this case inside, when said strand 1 is subjected to loading, particularly when arms 1', 1" of said strand 1 are subjected to loading.

Particularly, said clamping elements 8, aimed at realising counter bending points, are close to the final portion of bending points 5, 6 and in correspondence of arms 1', 1" of the strand 1.

Thus, it is clear that, in case of breaking of one or more portions of ribbon 2 and consequent unbalancing of strand 1 load, outer force, in absence of sliding/rotation around pins 11, are uniformly distributed in remaining sections of ribbon portions 2 (as shown in figure 3b).

A preferred embodiment of clamping device according to the invention is shown in figures 4 - 8 and indicated by reference number 10.

Said clamping device 10 comprises a element 11 for hooking to the structure (not shown), coincident with said pin 11 on which said strand 1 ribbon 2 is wound, thus realising a bundle winding with two arms 1', 1" and two bending points 5 and 6, two positioning and guiding plates 12 of said ribbon 2 on said hooking element 11, provided outside and laterally with respect to said ribbon 2, so as to contain said plurality of turns, each one comprising a first hole 15 and a second hole 16, between said two first holes 15 of said plates 12 being inserted said hooking element 11. Said clamping device 10 further comprises two thrust elements 13, symmetric with respect to the axis y extending between the two pins 11 of the strand 1. Said thrust elements 12 can be inserted within said second holes 16 of said plates 12, laterally with respect to said arms 1', 1" of said strand 1.

Finally, said clamping element 10 comprises two fixing elements 14 that can be coupled with said hooking element 11, outside said plates 12, in correspondence of said first hole 15, in order to block said clamping device 10.

Said clamping device 10, by said thrust elements 13, realizes two counter-bending points 17 and 18 on each arm 1' and 1" of the same strand 1. A first counter-bending point 17 is close to the end of the bending point 5 or 6 of strand 1, causing its straightening, and the second counter-bending point 18 acts on arms 1', 1" of the strand 1, in order to obtain a tightening action on the same.

Particularly, said first 15 and second 14 holes have a circular shape, the centres of which are provided along axis y passing through pins 11 of strand 1. Said hooking element 11 has a cylindrical body, the section of which has an outer diameter apt to be inserted within said first hole 15 of said plate 12.

Further, said hooking element 11 can advantageously, but not necessarily,

Have a wedge-shaped projection 19, having a symmetry axis coaxial with respect to the axis y passing between pins 11 and thus with centre of circumference of the section of said cylindrical body. Said projection 19 aims at preventing, as a further protection, sliding between two arms 1', 1" of said strand 1 preventing rotation of the hooking element 11.

Said thrust elements 13 preferably have a cylinder arc section, with the ray substantially equivalent to the ray of said second hole 16 of said plates 12. Said thrust elements 13 are thus symmetrically inserted in said second hole 13. Therefore, each thrust element 13 pushes on each arm 1' or 1" of said strand 1, in correspondence of the two counter-bending points 17, 18, preventing a possible sliding of strand 1 caused by an asymmetry or unbalancing of the two arms 1' and 1".

Thus, it is clear that, in case of breaking of one or more ribbon portions 2, being it prevented relative sliding, two arms 1', 1" are obliged to the same lengthening and thus every single portion of the ribbon 2 is subjected to the same load, i.e. force F applied on said hooking element 11 is uniformly redistributed in remaining ribbon 2 sections.

Strand-clamping device system according to the invention, when loaded, is self-tightening.

A further advantage of the invention is that of being agile and manageable, since it can be easily realised, as well as economic.

In preferred, but not exclusive, embodiments, said ribbon 2 can have a rectangular cross-section.

Thickness of the ribbon is advantageously thin, in the order of millimetre, since it permits a double advantage: it is possible turning over it (strand forming) due to the reduced flexional rigidity; and obtaining high and uniform mechanical features as a consequence of the productive process by cold drawing.

In further embodiments, ribbon 2 can have at least a face with sticky or adhesive surface, so as to exaggerate sealing of adjacent ribbon portions when strand is subjected to a load, obtaining a greater durability.

Particularly, a resin can be used as glue, to be hardened when the strand is realised and used.

Further, the advantage of simplifying coupling between strand 1 and structure (not shown) by clamping device according to the invention, particularly by hooking element, permitting eliminating fusion, particularly bulky and expensive constructive particulars, expensive technologies and difficult control.

Hooking element can advantageously provide a ball joint, housed within hollow body of hooking element, as it is shown in the embodiments described in the following.

A second embodiment of the clamping device according to the invention, indicated by reference number 20, is shown in figures 9 - 14.

Said clamping device 20 further comprises two positioning and guide plates 22 for said ribbon 2 on said second body 24 of the hooking element 21, so as to contain a plurality of turns, provided outside and laterally with respect to said ribbon 2, each one comprising a first hole 25 and two second holes 26, that advantageously, but not necessarily, are circular, symmetric with respect to the axis y of the strand 1, between said first holes 25 of said plates 22, inserting between said second body 24 of the hooking element 21, and two thrust elements 23, each one able to enter within said second holes 26 of said plates 22.

Said clamping device 20 realises, by said thrust elements 23, a counter-bending point 27 on each arm 1', 1" of the strand 1, close to the end of the counter-bending point 5 or 6 of the strand 1, thus causing its straightening.

Particularly, said first 25 and second 26 holes have a circular shape, the centres of which are symmetrically provided with respect to axis y passing between pins 11 of strand 1. Said second body 24 of said hooking element has a hollow cylindrical body, the section of which has the outer diameter apt to enter within said first hole 25 of said plate 22 and inner diameter of hollow body has such dimensions to house the first body 21 of the hooking element.

Further, said second body 24 of the hooking element can advantageously, but not necessarily, have a wedge-shaped projection, having the symmetry axis coaxial with respect to the axis y passing through pins 11 of strand 1 in order to prevent, as a further protection, sliding between two arms 1', 1" of said strand 1 preventing rotation of said second body 24 about said pin 11 coupling with the structure (not shown).

Said thrust elements 23 preferably are two cylindrical pins having such a section to have the outer radius substantially equivalent to the radius of the relevant second hole 26 of said plates 22, so as to enter within the same. Therefore, each thrust element 23 pushes outward on each arm 1', 1" of said strand 1, in correspondence of the relevant counter-bending point 27, thus preventing a possible sliding of strand 1 caused by a possible asymmetry or unbalancing of the two arms 1' and 1 ".

A third embodiment of the clamping device according to the invention, indicated by reference number 30, is shown in figures 15 - 20.

Said clamping device 30 is difference with respect to the one described with reference to figures 9 - 14 since, besides providing an element for hooking to the structure (not shown), comprising a first body 31, conveniently, but not necessarily, a ball joint, for hooking to the structure, and a second body 34, wounding said first body 31, coincident with pin 11 about which said ribbon 2 of said strand 1 realised by a bundle winding with two arms 1', 1" is wound, two positioning and guiding plates 32 for said ribbon 2 on said second body of the hooking element, so as to contain said plurality of turns, provided outside and laterally with respect to said ribbon 2, each one of them only having a single hole 35. Further, said clamping device 30 according to the third embodiment has a single thrust element 33, apt to enter within said first holes 35 of said plates 22 and, at the same time, partially winds said strand 1 in correspondence of said bending point 5.

Particularly, said thrust element 33 has a "C" shaped cross-section with two free ends, so that said clamping device 30, by said thrust element 33, realises, in correspondence of the free ends, a counter-bending point 37 for each arm 1' and 1" of the strand 1, close to the end of the bending point 5 or 6 of the strand 1, causing its straightening, preventing a possible sliding of strand 1 caused by an asymmetry or unbalancing of the two arms 1' and 1".

A fourth embodiment of the clamping device according to the invention, indicated by reference number 40, is shown in figures 21 - 26.

Said clamping device 40 further comprises an element for hooking to the structure 41, coincident with one of the two pins 11 about which said ribbon 2 of said strand 1 realised by a bundle winding with two arms 1', 1" is wound, and two bending points 5, 6, two positioning and guiding plates 42 for said strand 1, so as to contain said plurality of turns, each plate 42 comprising two shaped housings 43, through which said arms 1' and 1" are passed when said plates 42 are coupled each other.

Said clamping device 40 further comprises a fixing element 44, apt to fix said coupled plates to the hooking element 41.

Said fixing element 44 can be a pin that can pass through a further through housing 46, obtained in each plate 42 and provided along said axis y, and coupling with said hooking element 41.

In this particular embodiment, said shaped housings 43 of said plates 42 are symmetric with respect to axis y passing between pins 11 about which the strand is wound and have a circumference arc shape so as to push on each arm 1' or 1" creating a counter-bending point 47, when said strand 1 is subjected to a load, thus determining its straightening in case of asymmetry or unbalancing of the load applied on said strand 1.

Particularly, said two strands 42 can realise a single block element, comprising two shaped through holes 43 through which said arms 1' and 1" are respectively passed and a central through hole 46 to house said fixing element 44.

A fifth embodiment of the clamping device according to the invention, indicated by reference number 50, is shown in figures 27 - 32.

Said clamping device 50 is an improvement of the second embodiment shown in figure 9 - 14, comprising hooking element 51 and two lateral plates 52 in a single block, so that first hole 55 of lateral plates 52 is coincident with the hole of the hooking element 51 for housing the hooking element 51 to the structure, such as a ball joint.

Further plates 42 has two holes 56 symmetric with respect to the axis y passing through pins 11 about which the ribbon is wound, through which two thrust elements 53 pass, so that when said strand 1 is subjected to a load, thrust elements 53 push from outside on each arm 1' and 1" of the strand, creating a respective counter-bending point 57 straightening arms and preventing rotation of the strand 1 with respect to the pin 11 or hooking element 51 in case of asymmetry or unbalancing of the load applied to said strand 1.

All the embodiments of the clamping device of the strand according to the invention described in the above have the same advantages of the preferred embodiment described in the above.

Strand clamping device of every embodiment can be applied to the strand according to the invention in correspondence of only one or each bending point, without departing from the scope of the present invention.

Preferred embodiments of the present invention have been described in the above and variations have been suggested, but it is to be understood that those skilled in the art can introduce modifications and variations without departing from the relevant scope, as defined in the enclosed claims.

## Claims

1. Strand (1) comprised of a ribbon (2), mainly having a linear extension with flat faces and a substantially flattened straight cross-section, said strand (1) comprising two pins (11) spaced each other along an axis (y) passing between said pins (11), said ribbon (2) being wound up on said two pins (11), in such a way to continuously form a plurality of overlapped coils, wherein the plurality of ribbon portions (2) extending parallel to said axis (y) passing between a pin (11) and the other (11) realize two arms (1', 1") and a bending point (5, 6) in correspondence of each pin (11), said strand (1) comprising at least one clamping device (8; 10; 20; 30; 40; 50) in correspondence of at least one of said bending points (5, 6), able to direct, from outside toward inside said strand (1), each of said arms (1', 1") in at least one counter-bending point (1 7, 18; 27; 37; 47; 57) in order to block the mutual sliding of said plurality of ribbon (2) portions and the rotation of said strand (1) around at least one of said pins (11), as a result of a loss of balance of the load applied on said strand (1).

2. Strand (1) according to the previous claim, **characterized in** comprising a clamping device (8; 10; 20; 30; 40; 50) in correspondence of each of said bending points (5 and 6).

3. Strand (1) according to claim 1 or 2, **characterized in that** said at least one clamping device (8; 10; 20; 30; 40; 50) comprises retaining means (12, 14; 22; 32; 42, 44; 52) of said plurality of coils, and thrust means (13; 23; 33; 43; 53), able to direct, from outside toward the inside of said strand (1), each of said arms (1', 1") in said at least one counter-bending point (17,18; 27; 37; 47; 57).

4. Strand (1) according to claim 3, **characterized in that** said at least one clamping device (8; 10; 20; 30; 50) comprises a hooking element (11, 24, 31, 51) coincident one of said pins (11), on which it is wound up said ribbon (2), two side plates (12; 22; 32; 52), each having at least one hole (15, 16; 25, 26; 35; 55, 56), at least one thrust element (13; 23; 33; 53) apt to be inserted in said at least one hole (16; 26; 35; 56) of said side plates (12; 22; 32; 52), being arranged externally to said arms (1', 1") of said strand (1), in such a way to realize said at least one counter-bending point (17, 18; 27; 37; 57) on each arm (1', 1") of said strand (1).

5. Strand (1) according to the previous claim, **characterized in that** said clamping device (10) comprises two thrust elements (13) inserted in said at least one hole (16) of each of said side plates (12), each thrust element (13) being arranged externally with respect to a relevant arm (1', 1") of said strand (1).

6. Strand (1) according to the previous claim, **characterized in that** each one of said thrust elements (13) has a cross-section shaped as an arc of a cylinder, having an external radius so as to be inserted in said at least one hole (16) of each of said plates (12) in a symmetrical way in relation to said axis (y), and **in that** said thrust elements (13) realize two counter-bending points (17, 18) on each of said arms (1', 1").

7. Strand (1) according to any one of the claims 4 - 6, **characterized in that** said clamping device (10) further comprises two fastening elements (14), each one coupled to said pin (11) externally to a respective plate (12), in correspondence of at least one hole (15), in order to block said clamping device (10).

8. Strand (1) according to any one of the claims 5 - 7, **characterized in that** each plate (12) comprises two holes (15, 16), said hole (15) being able to house said pin (11), and said two thrust elements (13) being inserted through said hole (16) of each of said plates (12), and **in that** the centres of said holes (15, 16) are along said axis (y) passing between said first (11) and said second pin (11) on which said ribbon (2) is wound up.

9. Strand (1) according to claim 4, **characterized in that** each of said two side plates (22; 52) of said clamping device (20) comprises two holes (26; 56) among said at least one hole (25, 26; 55, 56), symmetrically arranged in relation to said axis (y), and **in that** two thrust elements (23; 53) are provided, each one being inserted in a respective hole (26; 56) of said plates (22; 52), being placed externally to said arms (1', 1") of said strand (1).

10. Strand (1) according to the previous claim, **characterized in that** said plates (52) and said pin (11) are one single integral element.

11. Strand (1) according to claim 4, **characterized in that** said at least one thrust element (33) has a "C" shaped cross-section partially wrapping said strand (1), having two free ends, said thrust element (33) realizing, in correspondence of said free ends, a counter-bending point (37) on each arm (1' and 1") of said strand (1).

12. Strand (1) according to claim 3, **characterized in that** said retaining means comprise two side plates (42) each one having two shaped housings (43), symmetrical each other with respect to said axis (y), in such a way that, when said plates (42) are coupled, said shaped housings (43) direct a respective arm (1', 1") of said strand (1) in said at least one counter-bending point (47).

13. Strand (1) according to the previous claim, **characterized in that** each of said plates (42) has a further housing (46) arranged along said axis (y), and **in that** said retaining means further comprise a fastening element (44) able to be inserted in said further housings (46) when said plates (42) are coupled to each other.

14. Strand (1) according to one of the claims 12 or 13, **characterized in that** said plates (42) are one single integral element.

15. Strand (1) according to any one of the previous claims, **characterized in that** said clamping device (10; 20; 30; 40; 50) comprises a hooking element coincident with one of said pins (11) and **in that** said pin (11) has a hole (25; 35; 45; 55) apt to house a connection element (21; 31) provided with ball joint.

16. Strand (1) according to any one of the previous claims, **characterized in that** said clamping device (10) comprises one hooking element coincident with one of said pins (11) and **in that** said pin (11) has a radial wedge-shaped protrusion (19), apt to be placed between said arms (1', 1") of said strand (1) along said axis (y) in order to avoid the sliding between said arms (1', 1"), preventing the rotation of said pin (11) around its axis.

17. Strand (1) according to any one of the previous claims, **characterized in that** at least one of said faces of said ribbon (2) is rendered sticky.

## Patentansprüche

1. Strang (1), umfassend aus einem Band (2), das hauptsächlich eine lineare Ausdehnung mit flachen Endflächen und einen in dem Wesentlichen abgeflachten geraden Querschnitt aufweist, wobei der Strang (1) zwei Stifte (11) aufweist, die entlang einer Achse (y), die zwischen den Stiften (11) verläuft, voneinander beabstandet sind, wobei das Band (2) an den beiden Stiften (11) aufgewickelt ist, so dass kontinuierlich eine Vielzahl von überlappenden Spulen gebildet wird, wobei die Vielzahl von Bandabschnitten (2), die sich parallel zu der Achse (y) erstrecken und zwischen einem Stift (11) und dem anderen (11) verlaufen, zwei Arme (1', 1") und einen Biegepunkt (5, 6) entsprechend jedem Stift (11) bilden, wobei der Strang (1) mindestens eine Klemmvorrichtung (8; 10; 20; 30; 40; 50) in Übereinstimmung mit mindestens einem der Biegepunkte (5, 6) umfasst, die in der Lage sind, jeden der Arme (1', 1") in mindestens einem Gegenbiegepunkt (17, 18; 27; 37; 47; 57) von der Außenseite zu der Innenseite des Strangs (1) zu richten, um das gegenseitige Gleiten der Vielzahl an Bandabschnitten (2) und die Drehung des Stranges (1) um mindestens einen der Stifte (11) infolge eines Gleichgewichtsverlustes der auf den Strang (1) ausgeübten Last zu blockieren.

2. Strang (1) nach dem vorstehenden Anspruch, **dadurch gekennzeichnet, dass** sie eine Klemmvorrichtung (8; 10; 20; 30; 40; 50) für jeden der Biegepunkte (5 und 6) umfasst.

3. Strang (1) nach Anspruch 1 oder 2, **dadurch gekennzeichnet, dass** die mindestens eine Klemmvorrichtung (8; 10; 20; 30; 40; 50) Haltemittel (12, 14; 22; 32; 42, 44; 52) der Vielzahl von Spulen und Schubmittel (13; 23; 33; 43; 53) umfasst, die in der Lage sind, jeden der Arme (1', 1") in dem mindestens einen Gegenbiegepunkt (17, 18; 27; 37; 47; 57) von der Außenseite zu der Innenseite des Strangs (1) zu richten.

4. Strang (1) nach Anspruch 3, **dadurch gekennzeichnet, dass** die mindestens eine Klemmvorrichtung (8; 10; 20; 30; 50) ein Hakenelement (11, 24, 31, 51) umfasst, das mit einem der Stifte (11) zusammentrifft, an dem das Band (2) aufgewickelt ist, zwei Seitenplatten (12; 22; 32; 52), die jeweils mindestens ein Loch (15, 16; 25, 26; 35; 55, 56) aufweisen, mindestens ein Schubelement (13; 23; 33; 53), das in das mindestens eine Loch (16; 26; 35; 56) der Seitenplatten (12; 22; 32; 52) eingesetzt werden kann, die außerhalb der Arme (1', 1") des Stranges (1) derart angeordnet ist, dass der mindestens eine Gegenbiegepunkt (17, 18; 27; 37; 57) an jedem Arm (1', 1") des Stranges (1) gebildet wird.

5. Strang (1) nach dem vorstehenden Anspruch, **dadurch gekennzeichnet, dass** die Klemmvorrichtung (10) zwei in das mindestens eine Loch (16) jeder der Seitenplatten (12) eingesetzte Schubelemente (13) umfasst, wobei jedes Schubelement (13) außen in Bezug auf einen entsprechenden Arm (1', 1") des Stranges (1) angeordnet ist.

6. Strang (1) nach dem vorstehenden Anspruch, **dadurch gekennzeichnet, dass** jedes der Schubelemente (13) einen Querschnitt aufweist, der als Zylinderbogen mit einem Außenradius, der ein Einsetzen in das mindestens eine Loch (16) jeder der Platten (12) symmetrisch zu der Achse (y) erlaubt, geformt ist, und dass in diesen Schubelementen (13) an jedem der Arme (1', 1") zwei Gegenbiegepunkte (17, 18) gebildet sind.

7. Strang (1) nach einem der Ansprüche 4 - 6,
**dadurch gekennzeichnet, dass** die Klemmvorrichtung (10) weiter zwei Befestigungselemente (14) umfasst, von denen jedes mit dem Stift (11) extern mit einer entsprechenden Platte (12) korrespondierend mit mindestens einem Loch (15) verbunden ist, um die Klemmvorrichtung (10) zu blockieren.

8. Strang (1) nach einem der Ansprüche 5 - 7, **dadurch gekennzeichnet, dass** jede Platte (12) zwei Löcher (15, 16) aufweist, wobei das Loch (15) den Stift (11) aufnehmen kann und die beiden Schubelemente (13) durch das Loch (16) jeder der Platten (12) eingeführt sind, und dass die Mittelpunkte der Löcher (15, 16) entlang der Achse (y) liegen, die zwischen dem ersten (11) und dem zweiten Stift (11) verläuft, auf dem das Band (2) aufgewickelt ist.

9. Strang (1) nach Anspruch 4, **dadurch gekennzeichnet, dass** jede der beiden Seitenplatten (22; 52) der Klemmvorrichtung (20) zwei Löcher (26; 56) zwischen dem mindestens einen Loch (25, 26; 55, 56) aufweist, die symmetrisch zu der Achse (y) angeordnet sind, und dass zwei Druckelemente (23; 53) vorgesehen sind, von denen jedes in ein entsprechendes Loch (26; 56) der Platten (22; 52) eingesetzt ist, das außerhalb der

10. Strang (1) nach dem vorstehenden Anspruch, **dadurch gekennzeichnet, dass** die Platten (52) und der Stift (11) ein einziges integrales Element sind.

11. Strang (1) nach Anspruch 4, **dadurch gekennzeichnet, dass** das mindestens eine Druckelement (33) einen C-förmigen Querschnitt aufweist, der den Strang (1) teilweise umhüllt, und zwei freie Enden aufweist, wobei das Schubelement (33) entsprechend den freien Enden einen Gegenbiegepunkt (37) an jedem Arm (1' und 1") des Strangs (1) bildet.

12. Strang (1) nach Anspruch 3, **dadurch gekennzeichnet, dass** die Haltemittel zwei Seitenplatten (42) umfassen, von denen jede zwei in Bezug auf die Achse (y) symmetrische Gehäuse (43) aufweist, so dass, wenn die Platten (42) gekoppelt sind, die geformten Gehäuse (43) einen entsprechenden Arm (1', 1") des Strangs (1) in den mindestens einen Gegenbiegepunkt (47) richten.

13. Strang (1) nach dem vorstehenden Anspruch, **dadurch gekennzeichnet, dass** jede der Platten (42) ein weiteres Gehäuse (46) aufweist, das entlang der Achse (y) angeordnet ist, und dass die Haltemittel weiter ein Befestigungselement (44) aufweisen, das in die weiteren Gehäuse (46) eingesetzt werden kann, wenn die Platten (42) miteinander gekoppelt sind.

14. Strang (1) nach einem der Ansprüche 12 oder 13, **dadurch gekennzeichnet, dass** die Platten (42) ein einziges integrales Element sind.

15. Strang (1) nach einem der vorstehenden Ansprüche, **dadurch gekennzeichnet, dass** die Klemmvorrichtung (10; 20; 30; 40; 50) ein mit einem der Stifte (11) zusammentreffendes Einhängeelement aufweist, und dass der Stift (11) ein Loch (25; 35; 45; 55) aufweist, das geeignet ist, ein mit einem Kugelgelenk bereitstellenes Verbindungselement (21; 31) aufzunehmen.

16. Strang (1) nach einem der vorstehenden Ansprüche, **dadurch gekennzeichnet, dass** die Klemmvorrichtung (10) ein mit einem der Stifte (11) zusammentreffendes Hakenelement aufweist, und dass der Stift (11) einen radialen keilförmigen Vorsprung (19) aufweist, der zwischen den Armen (1', 1") des Stranges (1) entlang der Achse (y) angeordnet werden kann, um das Gleiten zwischen den Armen (1', 1") zu vermeiden und die Drehung des Stiftes (11) um seine Achse zu verhindern.

17. Strang (1) nach einem der vorstehenden Ansprüche, **dadurch gekennzeichnet, dass** mindestens eine der Seiten des Bandes (2) klebend ausgeführt ist.

## Revendications

1. Cordon (1) constitué d'un ruban (2), ayant principalement une extension linéaire avec des faces planes et une section droite sensiblement aplatie, ledit cordon (1) comprenant deux broches (11) espacées l'une de l'autre selon un axe (y) passant entre lesdites broches (11), ledit ruban (2) étant enroulé sur lesdites deux broches (11), de manière à former en continu une pluralité d'enroulement se chevauchant, dans lequel la pluralité de parties de ruban (2) s'étendant parallèlement audit axe (y) passant entre une broche (11) et l'autre (11) forment deux bras (1', 1") et un point de pliage (5, 6) en correspondance avec chaque broche (11), ledit cordon (1) comprenant au moins un dispositif de serrage (8 ; 10 ; 20 ; 30 ; 40 ; 50) en correspondance avec au moins l'un desdits points de pliage (5, 6), pouvant diriger, de l'extérieur vers l'intérieur dudit cordon (1), chacun desdits bras (1', 1") dans au moins un point de contre-pliage (17, 18 ; 27 ; 37 ; 47 ; 57) afin de bloquer le coulissement mutuel de ladite pluralité de parties de ruban (2) et la rotation dudit cordon (1) autour d'au moins l'une desdites broches (11), résultant d'une perte d'équilibre de la charge appliquée sur ledit cordon (1).

2. Cordon (1) selon la revendication précédente, **caractérisé en ce qu'**il comprend un dispositif de serrage (8 ; 10 ; 20 ; 30 ; 40 ; 50) en correspondance avec chacun desdits points de pliage (5 et 6).

3. Cordon (1) selon la revendication 1 ou 2, **caractérisé en ce que** ledit au moins un dispositif de serrage (8 ; 10 ; 20 ; 30 ; 40 ; 50) comprend des moyens de retenue (12, 14 ; 22 ; 32 ; 42, 44 ; 52) de ladite pluralité d'enroulements, et des moyens de poussée (13 ; 23 ; 33 ; 43 ; 53), capables de diriger, de l'extérieur vers l'intérieur dudit cordon (1), chacun desdits bras (1', 1") dans ledit au moins un point de contre-pliage (17, 18 ; 27 ; 37 ; 47 ; 57).

4. Cordon (1) selon la revendication 3, **caractérisé en ce que** ledit au moins un dispositif de serrage (8 ; 10 ; 20 ; 30 ; 50) comprend un élément d'accrochage (11, 24, 31, 51) coïncidant avec l'une desdites broches (11), sur lequel est enroulé ledit ruban (2), deux plaques latérales (12 ; 22 ; 32 ; 52) comportant chacune au moins un orifice (15, 16 ; 25, 26 ; 35 ; 55, 56), au moins un élément de poussée (13 ; 23 ; 33 ; 53) susceptible d'être inséré dans ledit au moins un orifice (16 ; 26 ; 35 ; 56) desdites plaques latérales (12 ; 22 ; 32 ; 52), arrangé à l'extérieur desdits bras (1', 1") dudit cordon (1), de manière à réaliser ledit au moins un point de contre-pliage (17, 18 ; 27 ; 37 ; 57) sur chaque bras (1', 1") dudit cordon (1).

5. Cordon (1) selon la revendication précédente, **caractérisé en ce que** ledit dispositif de serrage (10) comprend deux éléments de poussée (13) insérés dans ledit au moins un orifice (16) de chacune desdites plaques latérales (12), chaque élément de poussée (13) étant disposé extérieurement par rapport à un bras concerné (1', 1") dudit cordon (1).

6. Cordon (1) selon la revendication précédente, **caractérisé en ce que** chacun desdits éléments de poussée (13) a une section transversale formée en arc de cylindre, ayant un rayon externe de manière à être inséré dans ledit au moins un orifice (16) de chacune desdites plaques (12) d'une manière symétrique par rapport audit axe (y), et **en ce que** lesdits éléments de poussée (13) forment deux points de contre-pliage (17, 18) sur chacun desdits bras (1', 1").

7. Cordon (1) selon l'une quelconque des revendications 4 à 6, **caractérisé en ce que** ledit dispositif de serrage (10) comprend en outre deux éléments de fixation (14), chacun couplé à ladite broche (11) à l'extérieur d'une plaque respective (12), en correspondance avec au moins un orifice (15), afin de bloquer ledit dispositif de serrage (10).

8. Cordon (1) selon l'une quelconque des revendications 5 à 7, **caractérisé en ce que** chaque plaque (12) comporte deux orifices (15, 16), ledit orifice (15) pouvant loger ladite broche (11), et lesdits deux éléments de poussée (13) étant insérés à travers ledit orifice (16) de chacune desdites plaques (12), et **en ce que** les centres desdits orifices (15, 16) se situent le long dudit axe (y) passant entre ladite première (11) et ladite seconde broche (11) sur lesquelles ledit ruban (2) est enroulé.

9. Cordon (1) selon la revendication 4, **caractérisé en ce que** chacune desdites deux plaques latérales (22 ; 52) dudit dispositif de serrage (20) comporte deux orifices (26 ; 56) parmi lesquels au moins un orifice (25, 26; 55, 56), disposé symétriquement par rapport audit axe (y), et **en ce que** deux éléments de poussée (23 ; 53) sont ménagés, chacun étant inséré dans un orifice respectif (26 ; 56) desdites plaques (22; 52), placés à l'extérieur desdits bras (1', 1") dudit cordon (1).

10. Cordon (1) selon la revendication précédente, **caractérisé en ce que** lesdites plaques (52) et ladite broche (11) sont un unique élément monobloc.

11. Cordon (1) selon la revendication 4, **caractérisé en ce que** ledit au moins un élément de poussée (33) a une section transversale en forme de « C » enveloppant partiellement ledit cordon (1), comportant deux extrémités libres, ledit élément de poussée (33) formant, en correspondance avec lesdites extrémités libres, un point de contre-courbure (37) sur chaque bras (1' et 1") dudit cordon (1).

12. Cordon (1) selon la revendication 3, **caractérisé en ce que** lesdits moyens de retenue comprennent deux plaques latérales (42) ayant chacune deux logements conformés (43), symétriques l'un de l'autre par rapport audit axe (y), de manière telle que, lorsque lesdites plaques (42) sont couplées, lesdits logements conformés (43) dirigent un bras respectif (1', 1") dudit cordon (1) dans ledit au moins un point de contre-pliage (47).

13. Cordon (1) selon la revendication précédente, **caractérisé en ce que** chacune desdites plaques (42) comporte un autre logement (46) disposé le long dudit axe (y), et **en ce que** lesdits moyens de retenue comprennent en outre un élément de fixation (44) pouvant être inséré dans lesdits autres logements (46) lorsque lesdites plaques (42) sont couplées l'une à l'autre.

14. Cordon (1) selon l'une des revendications 12 ou 13, **caractérisé en ce que** lesdites plaques (42) sont un unique élément monobloc.

15. Cordon (1) selon l'une quelconque des revendications précédentes, **caractérisé en ce que** ledit dispositif de serrage (10 ; 20 ; 30 ; 40 ; 50) comprend un élément d'accrochage coïncidant avec l'une desdites broches (11) et **en ce que** ladite broche (11) présente un orifice (25 ; 35 ; 45 ; 55) adapté à loger un élément de liaison (21 ; 31) pourvu d'un joint à rotule.

16. Cordon (1) selon l'une quelconque des revendications précédentes, **caractérisé en ce que** ledit dispositif de serrage (10) comprend un élément d'accrochage coïncidant avec l'une desdites broches (11) et **en ce que** ladite broche (11) présente une saillie radiale en forme de coin (19), pouvant être placée entre lesdits bras (1', 1") dudit cordon (1) le long dudit axe (y) afin d'éviter le coulissement entre lesdits bras (1', 1"), empêchant la rotation de ladite broche (11) autour de son axe.

17. Cordon (1) selon l'une quelconque des revendications précédentes, **caractérisé en ce qu'**au moins l'une desdites faces dudit ruban (2) est rendue collante.
